# EUROPEAN PATENT APPLICATION

(11) **EP 4 755 282 A1**
(43) Date of publication of application: **10.06.2026**
(21) Application number: 25198759.0
(22) Date of filing: 28.08.2025
(51) Int. Cl.: A47L 15/42

(54) **A DISHWASHER COMPRISING A HEAT PUMP**

(30) Priority: 03.12.2024 TR 2024017446
(71) Applicant: Arçelik Anonim Sirketi, 34445 Istanbul (TR)
(72) Inventor: TAVSANCI, GOKAY, 34445 ISTANBUL (TR); BALIKCI, ILHAN, 34445 ISTANBUL (TR); SERT, ABDULLAH, 34445 ISTANBUL (TR); TUKTA, CANER, 34445 ISTANBUL (TR); SEREN, ERDOGAN MERT, 34445 ISTANBUL (TR)

(57) **Abstract**

The present invention relates to a dishwasher (1) comprising a body (2); a washing tub (3) which is disposed in the body (2) and wherein the washing process is performed; at least one spraying member (4) which sprays water onto the kitchen items placed into the washing tub (3); and a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle.

## Description

The present invention relates to a dishwasher comprising a heat pump.

In dishwashers, heat pumps are used for decreasing the energy consumption and improve the drying performance. In heat pump dishwashers, the heat pump is composed of the compressor, the condenser, the throttle valve and the evaporator. The components of the heat pump are connected via a tube line and the heat pump operates by means of the cycle fluid in the line. The condenser is a tube bundle having a hot surface and enables the water to be heated by being positioned in the washing liquid of the dishwasher. The evaporator has a cold surface and is positioned so as to contact the ambient air. The evaporator absorbs heat from the environment and provides the heat transfer to the compressor and the condenser. In this type of heat pump systems, for heating the water, the compressor is operated such that the condenser is enabled to heat the water, and the evaporator is enabled to absorb heat from the environment to support the condenser which heats the water. The compressor pressurizes and sends the cycle fluid to the condenser. The cycle fluid passes through the condenser and reaches the evaporator. After the evaporator, the cycle fluid returns to the compressor. By sending the fluid received by the compressor to the condenser again, the cycle is completed. Thus, the heating of the washing water is performed much more efficiently compared to the conventional dishwashers having a heater.

However, the heat pump dishwasher systems are dependent on many dynamic conditions during the water heating process. If these conditions are not kept under control, the system may become inefficient. For example, since in the heat pump dishwasher, the heat pump is located in the base casing volume, the temperature of the air sucked from the base casing volume and blown onto the evaporator by the fans increases depending on the rising temperatures of the components during the cycle, and thus, the evaporation temperature gradually increases. Again, since the same water is continuously heated on the condenser side, the temperature of the heated water changes the capacity of the condenser. As there is no dynamic control system on the system to respond to this situation, the efficiency of the system decreases as the water heats up, and the operating conditions of the compressor become strained.

In the state of the art European Patent Document No. EP3148392B1, a dishwasher is disclosed, comprising a heat pump. The said dishwasher ensures that the fans are controlled depending on the ambient temperature while the washing water is heated.

The aim of the present invention is the realization of a dishwasher comprising a heat pump which can adapt to variable operational conditions.

The dishwasher realized in order to attain the aim of the present invention, explicated in the first claim and the respective claims thereof, comprises a body; a washing tub which is disposed in the body; at least one spraying member which sprays water into the washing tub; a temperature sensor which is disposed in the washing tub; a main washing cycle having a heating step for heating the washing water and a circulation step for circulating the water in the washing tub; and a heat pump which is disposed in the body. The heat pump has a first heat exchanger which absorbs heat from the environment so as to enable the water used in the washing step to be heated; a second heat exchanger which transfers the heat received from the first heat exchanger to the washing water; and a compressor which is in fluid communication with the first heat exchanger and the second heat exchanger and which performs the refrigerant cycle. Thus, by utilizing the ambient temperature, the washing water can be heated more efficiently.

The dishwasher of the present invention comprises a control unit which enables the compressor speed to be changed. By means of the change in the compressor speed, the washing process is performed without increasing the energy consumption and without decreasing the washing efficiency depending on the ambient conditions. Thus, the dishwasher can adapt to dynamic ambient conditions.

In an embodiment of the present invention, the dishwasher comprises the control unit which enables the compressor speed to be changed depending on the ambient temperature. The control unit ensures that the compressor speed is decreased if the measured ambient temperature is higher than the ambient temperature predetermined by the manufacturer, and that the compressor speed is increased if the measured ambient temperature is lower than the ambient temperature predetermined by the manufacturer. Thus, in hot environments, the heat pump is enabled to heat the washing water with lower energy.

**In** an embodiment of the present invention, the dishwasher comprises a temperature sensor which is provided on the washing tub and the control unit which enables the compressor speed to be changed according to the temperature value measured by the temperature sensor. The temperature value measured from the inside of the washing tub is perceived as the ambient temperature and is compared with the reference value predetermined by the manufacturer. The control unit ensures that the compressor speed is decreased if the measured ambient temperature is higher than the ambient temperature predetermined by the manufacturer, and that the compressor speed is increased if the measured ambient temperature is lower than the ambient temperature predetermined by the manufacturer. Thus, in hot environments, the heat pump is enabled to heat the washing water with lower energy.

In an embodiment of the present invention, the dishwasher comprises a temperature sensor which is provided on the sump and the control unit which enables the compressor speed to be changed as a result of comparing the temperature information received from the temperature sensor after a period predetermined by the manufacturer with the reference value predetermined by the manufacturer. The temperature value taken from the inside of the sump after a certain period of time passes is accepted as the ambient temperature. The control unit ensures that the compressor speed is decreased if the measured ambient temperature is higher than the ambient temperature predetermined by the manufacturer, and that the compressor speed is increased if the measured ambient temperature is lower than the ambient temperature predetermined by the manufacturer. Thus, in hot environments, the heat pump is enabled to heat the washing water with lower energy.

In an embodiment of the present invention, the dishwasher comprises the control unit which enables the compressor speed to be changed by comparing the temperature of the mains water with a water temperature value predetermined by the manufacturer. The control unit ensures that the compressor speed is decreased if the temperature of the mains water is higher than a water temperature value predetermined by the manufacturer, and that the compressor speed is increased if the measured water temperature is lower than the water temperature predetermined by the manufacturer. Thus, less power is consumed for heating the water which already has a certain temperature. Consequently, energy saving is provided.

In an embodiment of the present invention, the dishwasher comprises a temperature sensor which is provided on the sump and which ensures the measurement of the temperature of the water coming from the mains, and the control unit which enables the compressor speed to be changed by comparing the water temperature value measured by the temperature sensor with a water temperature value predetermined by the manufacturer. The control unit ensures that the compressor speed is decreased if the temperature of the mains water is higher than a water temperature value predetermined by the manufacturer, and that the compressor speed is increased if the measured water temperature is lower than the water temperature predetermined by the manufacturer. Thus, less power is consumed for heating the water which already has a certain temperature. Consequently, energy saving is provided.

In an embodiment of the present invention, the dishwasher comprises a load sensor which ensures the measurement of the amount of load in the washing tub and the control unit which enables the compressor speed to be changed by comparing the information received from the load sensor with a load value predetermined by the manufacturer. If the amount of load measured by the load sensor is higher than the load amount predetermined by the manufacturer, the compressor speed is increased, and if lower, the compressor speed is decreased. Thus, energy saving is achieved in cases of low load amounts.

In an embodiment of the present invention, the dishwasher ensures that the temperature of the washing water is kept at the highest value at each step by means of the change of the compressor speed. Thus, the washing performance is increased.

By means of the present invention, depending on the changing dynamic values, the water is heated with lower energy and is always kept at the highest temperature value.

Thus, it is ensured that the washing performance is improved without increasing energy consumption, and that the heat pump adapts to the changing ambient conditions.

A dishwasher realized in order to attain the aim of the present invention is illustrated in the attached figures, where:

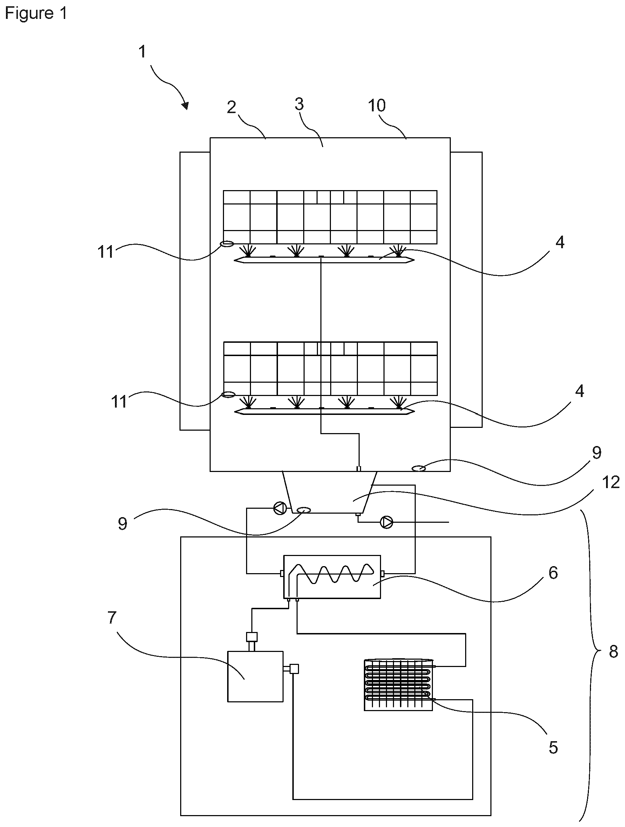

Figure 1 - is the schematic view of the dishwasher.

The elements illustrated in the figures are numbered as follows.
1- Dishwasher
2- Body
3- Washing tub
4- Spraying member
5- First heat exchanger
6- Second heat exchanger
7- Compressor
8- Heat pump
9- Temperature sensor
10- Control unit
11-Load sensor
12- Sump

The dishwasher (1) comprises a body (2); a washing tub (3) which is disposed in the body (2) and wherein the washing process is performed; at least one spraying member (4) which sprays water onto the kitchen items placed into the washing tub (3); and a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle. The ambient air is drawn in by means of the first heat exchanger (5) and is used for heating the washing water. Thus, the heating process is performed with high energy efficiency in the heat pump dishwasher (1).

The dishwasher (1) of the present invention comprises a control unit (10) which enables the compressor (7) speed to be changed. The compressor (7) speed is dynamically changed by means of the control unit (10). Thus, energy saving and efficiency are achieved by means of a heat pump (8) which can adapt to the ambient conditions. In an embodiment of the present invention, the dishwasher (1) comprises the control unit (10) which enables the compressor (7) speed to be decreased if the measured ambient temperature (Tölç) is greater than a temperature value (Te 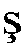 ik) predetermined by the manufacturer, and enables the compressor (7) speed to be increased if the measured temperature value is lower than the determined temperature value. The ambient temperature is measured via a sensor. If the ambient temperature is greater than a predetermined value, it is predicted that the water will indirectly heat up more quickly in a warmer environment, and therefore, the compressor (7) speed is decreased. Consequently, energy saving is provided. If the ambient temperature is lower than the determined value, the compressor (7) speed is increased to prevent the washing efficiency from decreasing. Thus, a heat pump (8) which dynamically adapts to the ambient temperature is realized.

In an embodiment of the present invention, the dishwasher (1) comprises a temperature sensor (9) which is provided on the washing tub (3) and which ensures the measurement of ambient temperature, and the control unit (10) which enables the compressor (7) speed to be decreased if the temperature value (Tölç) measured by the temperature sensor (9) is greater than a temperature value (Te 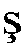 ik) predetermined by the manufacturer, and enables the compressor (7) speed to be increased if the measured temperature value is lower than the determined temperature value. The ambient temperature can be measured by means of the temperature sensor (9) provided on the washing tub (3). The washing tub (3) is in direct contact with the ambient air, and therefore, the temperature information received from the temperature sensor (9) provided on the washing tub (3) is compared with a temperature value predetermined by the manufacturer, and the compressor (7) speed is changed accordingly. The control unit (10) ensures that the compressor (7) speed is decreased if the measured ambient temperature is higher than the ambient temperature predetermined by the manufacturer, and that the compressor (7) speed is increased if the measured ambient temperature is lower than the ambient temperature predetermined by the manufacturer. Thus, in hot environments, the heat pump (8) is enabled to heat the washing water with lower energy.

In an embodiment of the present invention, the dishwasher (1) comprises a temperature sensor (9) which is provided on the sump (12) and the control unit (10) which enables the compressor (7) speed to be decreased if the air temperature value (Tölç) measured by the temperature sensor (9) after a predetermined period is greater than a temperature value (Te 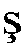 ik) predetermined by the manufacturer, and enables the compressor (7) speed to be increased if the measured temperature value is lower than the determined temperature value. During the washing cycle, the sump (12) is filled with water. After the washing process is completed, the water in the sump (12) is completely discharged so as to keep the sump (12) empty. In this case, since the ambient air is present in the sump (12), the temperature of the ambient air can be detected by means of the temperature sensor (9) provided on the sump (12). The temperature information received from the temperature sensor (9) provided on the sump (12) is compared with a temperature value predetermined by the manufacturer, and the compressor (7) speed is changed accordingly. The control unit (10) ensures that the compressor (7) speed is decreased if the measured ambient temperature is higher than the ambient temperature predetermined by the manufacturer, and that the compressor speed (7) is increased if the measured ambient temperature is lower than the ambient temperature predetermined by the manufacturer. Thus, in hot environments, the heat pump (8) is enabled to heat the washing water with lower energy.

In an embodiment of the present invention, the dishwasher (1) comprises a temperature sensor (9) which ensures the measurement of the temperature of the water taken from the mains, and the control unit (10) which enables the compressor (7) speed to be decreased if the water temperature value (Tölç) measured by the temperature sensor (9) is greater than a temperature value (Te 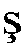 ik) predetermined by the manufacturer, and enables the compressor (7) speed to be increased if the measured temperature value is lower than the determined temperature value. The temperature of the mains water is detected by means of the temperature sensor (9) positioned on the path where the mains water enters the dishwasher (1). If the temperature of the mains water is greater than a temperature value predetermined by the manufacturer, the compressor (7) speed is decreased, and if lower, the compressor (7) speed is increased. Thus, less power is consumed for heating the water which already has a certain temperature. Consequently, energy saving is provided.

In an embodiment of the present invention, the dishwasher (1) comprises a temperature sensor (9) which is provided on the sump (12) and which ensures the measurement of the temperature of the water coming from the mains, and the control unit (10) which enables the compressor (7) speed to be decreased if the water temperature value (Tölç) measured by the temperature sensor (9) is greater than a temperature value (Te 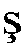 ik) predetermined by the manufacturer, and enables the compressor (7) speed to be increased if the measured temperature value is lower than the determined temperature value. The water taken from the mains fills into the sump (12). The temperature of the mains water is determined by means of the temperature sensor (9) provided on the sump (12). If the temperature of the mains water is greater than a temperature value predetermined by the manufacturer, the compressor (7) speed is decreased, and if lower, the compressor (7) speed is increased. Thus, less power is consumed for heating the water which already has a certain temperature. Consequently, energy saving is provided.

In an embodiment of the present invention, the dishwasher (1) comprises a load sensor (11) which ensures the measurement of the amount of load in the washing tub (3), and the control unit (10) which enables the compressor (7) speed to be increased if the measured load amount (Yölç), based on the information received from the load sensor (11), is greater than a load value (Ye 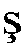 ik) predetermined by the manufacturer, and enables the compressor (7) speed to be decreased if the measured load value is lower than the determined load value. The load sensor (11) may be a weight sensor or an optical sensor. Any algorithm capable of determining the amount of load in the washing tub (3) is suitable for use in this embodiment. If the amount of load measured by the load sensor (11) is higher than the load amount predetermined by the manufacturer, the compressor (7) speed is increased, and if lower, the compressor (7) speed is decreased. Thus, energy saving is achieved in cases of low load amounts, and the washing performance is improved in cases of high load amounts.

In an embodiment of the present invention, the dishwasher (1) comprises the control unit (10) which ensures that the washing water temperature is maintained at a predetermined maximum temperature value (Tmax) at each step, by means of changing the compressor (7) speed. By means of the dynamic control of the compressor (7) speed depending on the ambient conditions, the water temperature is enabled to be kept at the highest value for each washing step. Thus, the washing performance is improved without increasing energy consumption.

By means of the present invention, a dishwasher (1) is realized, comprising a heat pump (8) which can operate in accordance with the ambient conditions by means of controlling the compressor (7) speed. Thus, the ambient conditions are detected, and the heat pump (8) is enabled to operate at high performance with low energy consumption.

## Claims

1. A dishwasher (1) **comprising** a body (2); a washing tub (3) which is disposed in the body (2) and wherein the washing process is performed; at least one spraying member (4) which sprays water onto the kitchen items placed into the washing tub (3); and a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle. The ambient air is drawn in by means of the first heat exchanger (5) and is used for heating the washing water, **characterized by** a control unit (10) which enables the compressor (7) speed to be changed.

2. A dishwasher (1) as in Claim 1, **characterized by** a temperature sensor (9) which is provided on the washing tub (3) and which ensures the measurement of ambient temperature, and the control unit (10) which enables the compressor (7) speed to be decreased if the temperature value (Tölç) measured by the temperature sensor (9) is greater than a temperature value (Te 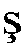 ik) predetermined by the manufacturer, and enables the compressor (7) speed to be increased if the measured temperature value is lower than the determined temperature value.

3. A dishwasher (12) as in Claim 1, **characterized by** a sump (12) which is provided under the washing tub (3) and wherein the washing water is collected, a temperature sensor (9) which is provided on the sump (12) and the control unit (10) which, after the washing process starts, enables the compressor (7) speed to be decreased if the air temperature value (Tölç) measured by the temperature sensor (9) after a predetermined period is greater than a temperature value (Te 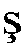 ik) predetermined by the manufacturer, and enables the compressor (7) speed to be increased if the measured temperature value is lower than the determined temperature value.

4. A dishwasher (1) as in Claim 1, **characterized by** a temperature sensor (9) which ensures the measurement of the temperature of the water taken from the mains, and the control unit (10) which enables the compressor (7) speed to be decreased if the water temperature value (Tölç) measured by the temperature sensor (9) is greater than a temperature value (Te 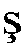 ik) predetermined by the manufacturer, and enables the compressor (7) speed to be increased if the measured temperature value is lower than the determined temperature value.

5. A dishwasher (1) as in Claim 4, **characterized by** a temperature sensor (9) which is provided on the sump (12) and which ensures the measurement of the temperature of the water coming from the mains, and the control unit (10) which enables the compressor (7) speed to be decreased if the water temperature value (Tölç) measured by the temperature sensor (9) is greater than a temperature value (Te 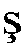 ik) predetermined by the manufacturer, and enables the compressor (7) speed to be increased if the measured temperature value is lower than the determined temperature value.

6. A dishwasher (1) as in Claim 1, **characterized by** a load sensor (11) which ensures the measurement of the amount of load in the washing tub (3), and the control unit (10) which enables the compressor (7) speed to be increased if the measured load amount (Yölç), based on the information received from the load sensor (11), is greater than a load value (Ye 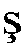 ik) predetermined by the manufacturer, and enables the compressor (7) speed to be decreased if the measured load value is lower than the determined load value.

7. A dishwasher (1) as in any one of the above claims, **characterized by** the control unit (10) which ensures that the washing water temperature is maintained at a predetermined maximum temperature value (Tmax) at each step, by means of changing the compressor (7) speed.
